# FASCICULE DE BREVET EUROPEEN

(11) **EP 3 632 089 B1**
(45) Date de publication et mention de la délivrance du brevet: **26.07.2023**
(21) Numéro de dépôt: 18737652.0
(22) Date de dépôt: 04.06.2018
(51) Int. Cl.: H04L 61/4511, H04L 61/58

(54) **OPTIMISATION DE LA FRÉQUENCE DE RAFRAÎCHISSEMENT D'UN ENREGISTREMENT DNS**
OPTIMIERUNG DER AKTUALISIERUNGSRATE EINER DNS-REGISTRIERUNG
OPTIMISATION DE LA FRÉQUENCE DE RAFRAICHISSEMENT D'UN ENREGISTREMENT DNS

(30) Priorité: 02.06.2017 FR 1754932
(43) Date de publication de la demande: 08.04.2020
(73) Titulaire: Orange, 92130 Issy-les-Moulineaux (FR)
(72) Inventeur: DUPONT, Baptiste, 92326 Châtillon cedex (FR); STEPHAN, Emile, 92326 Châtillon cedex (FR); FIEAU, Frédéric, 92326 Châtillon cedex (FR); CAYLA, Mathilde, 92326 Châtillon cedex (FR)
(86) Numéro de dépôt international: PCT/FR2018/000156
(87) Numéro de publication internationale: WO 2018/229361

(56) Documents cités:
- WO-A1-2016/160977
- US-A1- 2005 210 150
- US-A1- 2010 274 970
- Anonymous: "Domain Name System - Wikipedia", , 8 May 2017 (2017-05-08), XP055831673, Retrieved from the Internet: URL:https://en.wikipedia.org/w/index.php?t itle=Domain_Name_System&oldid=779318292 [retrieved on 2021-08-11]

## Description

### 1. Domaine de l'invention

La demande d'invention se situe dans le domaine du nommage et de l'adressage sur Internet, et plus particulièrement dans le domaine de la durée de vie des associations entre noms de domaine et adresses, aussi appelé enregistrements DNS (Domain Name System, ou système de noms de domaine, en anglais).

### 2. Etat de la technique antérieure

Lorsqu'une machine d'un utilisateur (appelée User Agent en anglais), que ce soit un ordinateur fixe ou un téléphone mobile, consulte une simple page Web, par exemple à l'aide d'un navigateur Web et du protocole http, elle doit récupérer les adresses IP d'un très grand nombre de noms de domaine. Pour chacun de ces noms de domaine, plusieurs requêtes DNS doivent donc être émises vers un serveur apte à lui retourner une adresse IP correspondante. Ce serveur, appelé serveur résolveur, est habituellement un serveur du fournisseur d'accès Internet de l'utilisateur.

Selon la nature du nom de domaine, c'est-à-dire selon qu'il désigne par exemple un site Web dont le contenu change peu, ou par exemple un contenu vidéo dans un serveur de cache dont les contenus sont par nature plutôt volatiles, la durée de la validité de l'association entre le nom de domaine et l'adresse varie fortement. C'est pourquoi une durée de vie est attachée à un enregistrement DNS, appelée TTL (time to live). Un enregistrement DNS, y compris son TTL, est fixé par un serveur dit faisant autorité, servant de référence pour les serveurs résolveurs qui le consultent. Les TTL sont fixés courts, de manière à ce que les réponses à des requêtes DNS ne soient pas conservées trop longtemps, ce qui augmenterait le risque que l'adresse IP associée à un nom de domaine et utilisée par un serveur ou une machine d'utilisateur soit fausse au moment où elle est utilisée.

Ceci implique qu'une machine d'utilisateur doit très fréquemment émettre des requêtes DNS vers un serveur résolveur, même pour des noms de domaine déjà connus de la machine. Cette fréquence d'émission, combinée à une évolution vers un DNS chiffré, augmente non seulement le trafic global sur Internet dû aux requêtes DNS, mais aussi le coût des serveurs résolveurs, pour leurs opérateurs.

Afin d'améliorer l'efficacité du système DNS, le document "Domain Name System - Wikipedia", du 8 mai 2017, XP055831673, utilise des serveurs de cache pour répliquer les enregistrements DNS au plus près des machines d'utilisateurs, mais cela ne contribue pas à diminuer le nombre de requêtes DNS dans le contexte ci-dessus.

Un des buts de l'invention est de remédier à ces inconvénients de l'état de la technique.

### 3. Exposé de l'invention

L'invention vient améliorer la situation à l'aide d'un procédé d'optimisation de la fréquence de rafraichissement d'au moins une partie d'un enregistrement selon la revendication indépendante 1.

En général, le premier identifiant est un nom de domaine, et le second identifiant est une adresse pour retrouver sur le réseau la ressource sur laquelle pointe le nom de domaine. Même si dans la suite ce cas est retenu dans les explications par souci de simplification, le procédé proposé couvre également le cas où le second identifiant est du même type que le premier, comme par exemple dans le cas d'enregistrements DNS de type CNAME, où le deuxième identifiant est aussi un nom de domaine, alias du premier identifiant.

Lorsqu'une machine d'utilisateur accède à un contenu sur un serveur applicatif, par exemple une page html sur un serveur Web, et que ce contenu référence un identifiant d'une ressource sur un réseau, par exemple Internet, mais sans adresse, tel qu'un nom de domaine sans adresse IP, la machine d'utilisateur doit émettre une requête dite DNS vers un serveur résolveur dont elle dépend, afin d'obtenir cette adresse.

En émettant, par anticipation, vers le serveur applicatif, l'association entre l'identifiant et l'adresse, le serveur résolveur permet au serveur applicatif de fournir, à son tour, ladite association à la machine d'utilisateur. Ainsi la requête DNS que cette machine aurait dû émettre vers le serveur résolveur, est évitée.

Selon un aspect, le procédé d'optimisation comprend en outre :
- une obtention d'une information relative à la pérennité de l'enregistrement,
- une modification de l'enregistrement en fonction de l'information, préalablement à l'émission.

L'avantage qu'est la suppression d'une requête DNS vers le serveur résolveur peut ne pas être obtenu, si l'adresse n'est pas à jour, ou si la durée de vie de l'association entre des éléments de l'enregistrement, aussi appelé TTL, est trop courte. En effet, si l'adresse est fausse parce qu'elle a changé depuis l'obtention de l'enregistrement par le serveur résolveur, la machine d'utilisateur émettra une requête pour obtenir un contenu vers une machine qui n'existe plus ou ne dispose plus du contenu demandé, et devra émettre une requête DNS pour obtenir une adresse correcte après avoir tenté de se connecter à la machine associée à l'adresse obtenue en réponse à la première requête. Et si le TTL est trop court, l'enregistrement DNS risque d'avoir expiré et la machine d'utilisateur devra émettre une requête DNS au moment où elle a besoin de l'adresse.

Avantageusement, grâce à cet aspect du procédé d'optimisation, le serveur résolveur émet vers le serveur applicatif un enregistrement (l'association et son TTL) ou une partie d'un enregistrement (l'association uniquement) après l'avoir modifié en fonction d'une information qu'il a obtenue et qui concerne sa pérennité. La pérennité est d'autant plus grande que l'association est exacte, ou que la durée de vie de l'association est longue.

Selon un aspect du procédé d'optimisation, au moins la durée de vie est modifiée.

Le TTL est ajusté, par exemple prolongé, en raison de la stabilité de l'association entre le nom et l'adresse, constatée par le serveur résolveur.

Selon un aspect du procédé d'optimisation, au moins le second identifiant est modifié.

Le serveur résolveur reçoit un message de la part d'un serveur faisant autorité, ou de la part d'un serveur de cache, lui signalant, avant l'expiration de la durée de vie de l'association entre le nom de domaine et l'adresse, que l'adresse a changé. Ce cas est aussi connu sous l'appellation "exception DNS". Le TTL fourni dans le message peut être aussi modifié, même s'il peut être préférable d'attendre pour cela que la stabilité de l'association soit constatée par le serveur résolveur.

Selon un aspect, le procédé d'optimisation comprend en outre une réception d'une demande d'abonnement à des mises à jour de l'enregistrement, de la part du serveur applicatif.

De manière préventive, un serveur applicatif peut ainsi obtenir un enregistrement le plus à jour possible auprès d'un serveur résolveur, concernant un nom de domaine qu'il utilise.

Selon un aspect, le procédé d'optimisation comprend en outre une émission préalable d'une demande d'abonnement à des mises à jour de l'enregistrement, à destination du serveur faisant autorité.

De manière préventive, un serveur résolveur peut ainsi obtenir un enregistrement le plus à jour possible auprès d'un serveur DNS faisant autorité, qui peut être une entité réseau répartissant du contenu sur plusieurs serveurs de cache, c'est-à-dire auprès d'un serveur hébergeant des associations entre noms de domaine et adresses, et dont les adresses changent fréquemment. L'abonnement concerne par exemple un nom de domaine pour lequel un serveur applicatif s'est auparavant abonné auprès du serveur résolveur.

Selon un aspect du procédé d'optimisation, l'au moins un second identifiant est le résultat d'une sélection d'un sous-ensemble à partir d'un ensemble de seconds identifiants associés au premier identifiant dans l'enregistrement obtenu.

Ainsi, le serveur résolveur peut envoyer au serveur applicatif un nombre restreint d'associations pour un même domaine lorsque plusieurs adresses IP sont indiquées dans l'enregistrement DNS reçu du serveur faisant autorité. Par exemple, il peut retirer les adresses ayant une durée de vie effective inférieure à celles des autres, sur la base de mesures effectuées par le serveur résolveur. Par exemple, si certaines adresses restent inchangées au cours de mises à jour successives d'un enregistrement, les autres adresses peuvent être retirées par le serveur résolveur, qui peut de plus, optionnellement, augmenter le TTL de l'enregistrement modifié car il ne contient plus que des adresses stables.

Le serveur résolveur peut également indiquer pour une des adresses sélectionnées qu'elle est l'adresse "par défaut", ou l'adresse à utiliser en priorité.

Les différents aspects du procédé d'optimisation qui viennent d'être décrits peuvent être mis en oeuvre indépendamment les uns des autres ou en combinaison les uns avec les autres.

L'invention concerne encore un dispositif d'optimisation de la fréquence de rafraichissement d'au moins une partie d'un enregistrement selon la revendication indépendante 8.

Ce dispositif, apte à mettre en oeuvre dans tous ses modes de réalisation le procédé d'optimisation qui vient d'être décrit, est destiné à être compris dans un serveur résolveur.

L'invention concerne aussi un serveur résolveur apte à recevoir et à émettre une requête de résolution d'identifiant d'une ressource sur un réseau, et comprenant un dispositif d'optimisation conforme à celui qui vient d'être décrit.

L'invention concerne encore un système d'optimisation de la fréquence de rafraichissement d'au moins une partie d'un enregistrement comprenant une association entre un premier identifiant d'une ressource sur un réseau et au moins second identifiant de la ressource, et une durée de vie pour ladite association, le système comprenant :
- un serveur résolveur conforme à celui qui vient d'être décrit,
- un serveur applicatif référençant le premier identifiant compris dans l'enregistrement, recevant de la part du serveur résolveur un message comprenant au moins ladite association, et émettant l'au moins un second identifiant vers un terminal d'utilisateur apte à émettre une requête de résolution d'identifiant d'une ressource sur un réseau vers le serveur résolveur.

Grâce à ce système d'optimisation, le terminal d'utilisateur, bien qu'apte à émettre une requête de résolution d'un nom de domaine vers le serveur résolveur dont il dépend de par son lien avec don fournisseur d'accès Internet par exemple, n'émet plus de requête de résolution pour des noms de domaine dont il a reçu une adresse au travers du serveur applicatif grâce au procédé d'optimisation décrit plus haut. Ceci diminue le nombre de requêtes de résolution émises par le terminal d'utilisateur vers le serveur résolveur, et allège la charge du terminal résolveur.

L'invention concerne aussi un programme d'ordinateur comprenant des instructions pour la mise en oeuvre des étapes du procédé d'optimisation qui vient d'être décrit, lorsque ce programme est exécuté par un processeur.

L'invention vise aussi un support d'informations lisible par un serveur résolveur, et comportant des instructions d'un programme d'ordinateur tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le support d'informations peut être n'importe quelle entité ou dispositif capable de stocker le programme. Par exemple, un support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, un support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, un support d'informations peut être un circuit intégré dans lequel un programme est incorporé, le circuit étant adapté pour exécuter ou pour être utilisé dans l'exécution des procédés en question.

### 4. Présentation des figures

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente un exemple de mise en oeuvre du procédé d'optimisation de la fréquence de rafraichissement d'un enregistrement DNS, selon quelques modes de réalisation de l'invention,
- la figure 2 présente un exemple de structure d'un dispositif d'optimisation de la fréquence de rafraichissement d'un enregistrement DNS, selon un aspect de l'invention.

### 5. Description détaillée d'au moins un mode de réalisation de l'invention

Dans la suite de la description, on présente des exemples de plusieurs modes de réalisation de l'invention se basant sur des enregistrements DNS de type A ou AAAA, c'est-à-dire où le premier identifiant est un nom de domaine et le second identifiant est une adresse IPv4 ou IPv6, mais l'invention s'applique également à tous les autres types. Dans le cas d'un enregistrement DNS de type CNAME par exemple, le second identifiant de la ressource n'est pas une adresse proprement dite mais un alias du nom de domaine de l'enregistrement. Dans le cas d'un enregistrement DNS de type TKEY par exemple, le second identifiant de la ressource est une clé numérique.

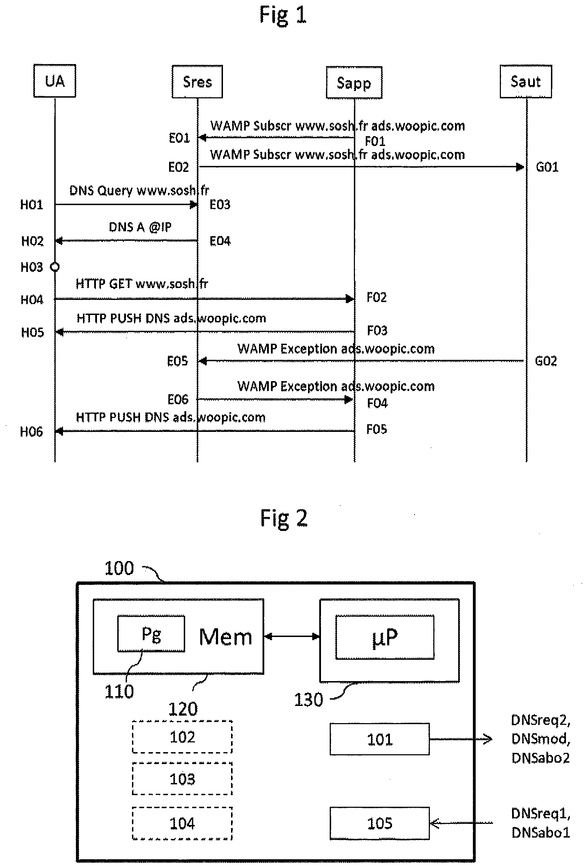

La **figure 1** présente un exemple de mise en oeuvre du procédé d'optimisation de la fréquence de rafraichissement d'un enregistrement DNS, selon quelques modes de réalisation de l'invention.

Dans cette figure UA désigne une machine ou un terminal d'utilisateur, aussi appelée en anglais User Agent. Par simplicité, le terme "terminal" est utilisé dans la suite du document, sachant qu'il peut désigner un "agent" tel qu'un navigateur Web par exemple, exécuté dans ou par le terminal.

Sres désigne un serveur résolveur affecté au terminal UA pour résoudre ses requêtes DNS.

Sapp désigne un serveur applicatif hébergeant un contenu auquel le terminal UA doit accéder, ce contenu pouvant inclure des références à des ressources ou contenus hébergés par d'autres serveurs. Le serveur applicatif Sapp peut être par exemple un serveur Web.

Saut désigne un serveur faisant autorité pour les requêtes DNS que reçoit le serveur résolveur Sres et qu'il ne peut résoudre lui-même.

Lors d'une étape H01, le terminal UA souhaite accéder au site www.sosh.fr, et le cache DNS du terminal UA ne contient pas déjà d'enregistrement pour le nom de domaine "www.sosh.fr". Le terminal UA émet donc une requête DNS vers le serveur résolveur Sres. Le serveur résolveur Sres est par exemple un serveur DNS de fournisseur d'accès Internet de l'utilisateur du terminal UA.

Lors d'une étape E03, le serveur résolveur Sres reçoit la requête DNS pour le nom de domaine "www.sosh.fr", et s'il n'a pas lui-même d'entrée pour ce nom de domaine dans son cache DNS, le serveur résolveur Sres émet une requête (non illustrée) vers le serveur faisant autorité Saut pour l'obtenir.

Lors d'une étape E04, le serveur résolveur Sres émet vers le terminal UA la réponse à la requête DNS, comprenant l'adresse IP correspondant au nom de domaine "www.sosh.fr", et qui est l'adresse IP du serveur applicatif Sapp.

Lors d'une étape H03, le terminal UA met à jour son cache DNS avec l'enregistrement DNS du site www.sosh.fr.

Lors d'une étape H04, le terminal UA ouvre une connexion HTTPS avec le serveur applicatif Sapp, le serveur Web du site www.sosh.fr, en émettant par exemple une requête "HTTPS GET www.sosh.fr". Le terminal UA, c'est-à-dire son navigateur, et le serveur applicatif Sapp peuvent à ce moment s'indiquer mutuellement le support du multiplexage "DNS over https".

Lors d'une étape F02, le serveur applicatif Sapp reçoit la requête HTTPS. Il répond lors d'une étape F03 avec les données du site www.sosh.fr. En plus, le serveur applicatif Sapp émet par anticipation dans la connexion HTTPS l'enregistrement DNS du domaine "ads.woopic.com", parce qu'il est référencé sur le site www.sosh.fr. L'hypothèse est faite que le serveur applicatif Sapp a cet enregistrement DNS dans son cache DNS.

Lors d'une étape H05, le terminal UA reçoit les données du site www.sosh.fr et l'enregistrement DNS du domaine "ads.woopic.com", dans la connexion HTTPS. Ce domaine étant présent dans des liens sur une page du site www.sosh.fr, le terminal UA n'aura pas besoin d'émettre de requête DNS vers le serveur résolveur Sres pour accéder au contenu hébergé par le site ads.woopic.com.

De son côté, le serveur résolveur Sres détecte que l'enregistrement DNS du domaine "ads.woopic.com" a changé. Il peut le faire selon au moins deux modes.

Selon un premier mode, lors d'une étape E05, le serveur résolveur Sres est notifié de ce changement par le serveur faisant autorité Saut, parce que le serveur résolveur Sres s'est préalablement abonné auprès du serveur faisant autorité Saut, lors d'une étape E02. Cette demande d'abonnement, reçue par le serveur faisant autorité Saut lors d'une étape G01, est par exemple un message "Subscr ads.woopic.com" utilisant par exemple le protocole WAMP transporté par le protocole Web socket, lui-même transporté sur HTTP1. Préalablement à l'étape E02, le serveur résolveur Sres peut avoir reçu, lors d'une étape E01, une demande d'abonnement similaire de la part du serveur applicatif Sapp.

Le message reçu par le serveur résolveur Sres lors de l'étape E05 est émis par le serveur faisant autorité Saut lors d'une étape G02, sous la forme par exemple d'un message "Exception ads.woopic.com" utilisant par exemple le protocole WAMP comme ci-dessus.

Selon un second mode non illustré, le serveur résolveur Sres constate que le TTL de l'enregistrement DNS du domaine "ads.woopic.com" est inadapté soit parce qu'il est resté inchangé pour une durée excédant son TTL, auquel cas le serveur résolveur Sres décide d'augmenter son TTL, soit parce qu'au contraire il change trop rapidement par rapport à son TTL, auquel cas le serveur résolveur Sres décide de le diminuer. Ainsi, le serveur résolveur Sres évite de recevoir des requêtes DNS inutiles concernant le domaine "ads.woopic.com".

Dans un mode comme dans l'autre, le changement de l'enregistrement DNS du domaine "ads.woopic.com" est notifié au serveur applicatif Sapp dans un message émis par le serveur résolveur Sres lors d'une étape E06, par exemple sous la forme d'un message "WAMP Exception ads.woopic.com".

Le serveur applicatif Sapp reçoit ce message lors d'une étape F04, et, lors d'une étape F05, le serveur applicatif Sapp transfère le message dans la connexion HTTPS en cours avec le terminal UA.

Lors d'une étape H06 similaire à l'étape H05, le terminal UA reçoit l'enregistrement DNS modifié du domaine "ads.woopic.com" et peut ainsi mettre à jour son cache DNS et éviter de solliciter inutilement Sres avec des requêtes DNS.

Dans un mode comme dans l'autre, le serveur résolveur Sres peut avoir reçu, lors d'une étape E01, une demande d'abonnement aux changements d'enregistrement DNS du domaine "ads.woopic.com", émis par le serveur applicatif Sapp lors d'une étape F01. Cet abonnement peut être nécessaire pour déclencher une notification du serveur résolveur Sres vers le serveur applicatif Sapp, que ce soit une "exception" DNS, c'est-à-dire la correction d'une adresse IP invalide ou devenue invalide (premier mode), ou un ajustement de TTL (second mode).

Dans un troisième mode non illustré, le serveur résolveur Sres émet vers le serveur applicatif Sapp l'enregistrement DNS du domaine "ads.woopic.com" dès que le serveur applicatif Sapp s'y est abonné, et dès que le serveur résolveur Sres obtient cet enregistrement. Dans ce mode, le serveur résolveur Sres n'attend pas que l'enregistrement DNS soit modifié pour le transmettre au serveur applicatif Sapp. Cela peut être utile au serveur applicatif Sapp qui n'a pas forcément cet enregistrement dans son cache DNS, et comme le serveur applicatif Sapp le communique à son tour au terminal UA, le serveur résolveur Sres ne recevra pas de requête DNS inutile.

Dans ce mode, le le serveur résolveur Sres peut aussi choisir d'envoyer au serveur applicatif Sapp une partie seulement des associations dans un enregistrement DNS pour un domaine.

Par exemple, si la vue DNS du le serveur résolveur Sres contient plusieurs "record A" pour un même nom de domaine particulier, "ads.woopic.com" dans notre exemple :
"ads.woopic.com A 23.43.21.12",
"ads.woopic.com A 22.33.44.55",
"ads.woopic.com A 44.23.12.45",
le serveur résolveur Sres peut aussi envoyer au serveur applicatif Sapp, pour ads.woopic.com, une partie de ces "records A", par exemple les deux premiers uniquement.

Il peut également enrichir cette liste avec, par exemple, une indication que le premier "record A" de la liste est un serveur par défaut, ou bien changer l'ordre des "records A".

En relation avec la **figure 2****,** on présente maintenant un exemple de structure d'un dispositif d'optimisation de la fréquence de rafraichissement d'un enregistrement DNS, selon un aspect de l'invention.

Le dispositif 100 de transmission d'information de routage met en oeuvre le procédé d'optimisation de la fréquence de rafraichissement d'un enregistrement DNS, dont différents modes de réalisation viennent d'être décrits.

Un tel dispositif 100 peut être mis en oeuvre dans un serveur de résolution de nom de domaine, dit serveur résolveur, apte à recevoir une requête DNSreq1 de résolution d'un nom de domaine de la part d'un terminal d'utilisateur, et à émettre une requête DNSreq2 correspondante vers un serveur faisant autorité lorsqu'il n'a pas lui-même la réponse à la requête reçue.

Par exemple, le dispositif 100 comprend une unité de traitement 130, équipée par exemple d'un microprocesseur µP, et pilotée par un programme d'ordinateur 110, stocké dans une mémoire 120 et mettant en oeuvre le procédé d'optimisation selon l'invention. A l'initialisation, les instructions de code du programme d'ordinateur 110 sont par exemple chargées dans une mémoire RAM, avant d'être exécutées par le processeur de l'unité de traitement 130.

Le dispositif 100 comprend également :
- un émetteur 101 apte à, et configuré pour émettre un message DNSmod comprenant au moins ladite association, à destination d'un serveur applicatif hébergeant un contenu comprenant le nom de domaine.

Avantageusement, l'unité de traitement 130 est également apte à, et configurée pour:
- obtenir (102) d'une information relative à la pérennité de l'enregistrement,
- modifier (103) l'enregistrement en fonction de l'information, préalablement à son émission,
- sélectionner (104) un sous-ensemble à partir d'un ensemble d'adresses associées au nom de domaine dans l'enregistrement obtenu.

Avantageusement, le dispositif 100 comprend également :
- un récepteur 105 apte à, et configuré pour recevoir une demande DNSabo1 d'abonnement à des mises à jour de l'enregistrement, de la part du serveur applicatif.

Avantageusement, l'émetteur 101 est également apte à, et configuré pour :
- émettre une demande DNSabo2 d'abonnement à des mises à jour de l'enregistrement, à destination du serveur faisant autorité.

Cette figure 2 illustre seulement une manière particulière, parmi plusieurs possibles, de réaliser l'algorithme détaillé ci-dessus, en relation avec la figure 1. En effet, la technique de l'invention se réalise indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où l'invention est implantée sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

## Revendications

1. **Procédé** d'optimisation de la fréquence de rafraichissement d'au moins une partie d'un enregistrement comprenant une association entre un premier identifiant d'une ressource sur un réseau et au moins un second identifiant de la ressource, et une durée de vie pour ladite association, le procédé étant mis en oeuvre par un serveur résolveur (Sres) ayant obtenu ledit enregistrement de la part d'un serveur dit faisant autorité (Saut), le procédé étant **caractérisé en ce qu'**il comprend :
• en anticipation d'un accès un terminal d'utilisateur (UA) à un contenu sur un serveur applicatif, ledit contenu référençant le premier identifiant, et suite à une modification de l'enregistrement, une émission (E06) d'un message comprenant au moins ladite association, à destination du serveur applicatif, de tel sorte que le serveur applicatif fournisse, à son tour, ladite association au terminal utilisateur, lorsque celui-ci accède au contenu.

2. **Procédé** d'optimisation selon la revendication 1, comprenant :
• une obtention (E05) d'une information relative à la pérennité de l'enregistrement,
• une modification de l'enregistrement en fonction de l'information, préalablement à l'émission (E06).

3. **Procédé** d'optimisation selon la revendication 2, où au moins la durée de vie est modifiée.

4. **Procédé** d'optimisation selon la revendication 2, où au moins le second identifiant est modifié.

5. **Procédé** d'optimisation selon l'une des revendications 1 à 4, comprenant en outre une réception (E01) d'une demande d'abonnement à des mises à jour de l'enregistrement, de la part du serveur applicatif (Sapp).

6. **Procédé** d'optimisation selon l'une des revendications 1 à 5, comprenant en outre une émission préalable (E02) d'une demande d'abonnement à des mises à jour de l'enregistrement, à destination du serveur faisant autorité (Saut).

7. **Procédé** d'optimisation selon l'une des revendications 1 à 6, où l'au moins un second identifiant est le résultat d'une sélection d'un sous-ensemble à partir d'un ensemble de seconds identifiants associés au premier identifiant dans l'enregistrement obtenu.

8. **Dispositif** d'optimisation de la fréquence de rafraichissement d'au moins une partie d'un enregistrement comprenant une association entre un premier identifiant d'une ressource sur un réseau et au moins un second identifiant de la ressource, et une durée de vie pour ladite association, le dispositif étant compris dans un serveur résolveur (Sres) ayant obtenu ledit enregistrement de la part d'un serveur dit faisant autorité (Saut), le dispositif étant **caractérisé en ce qu'**il comprend :
• un émetteur apte à émettre, en anticipation d'un accès par un terminal d'utilisateur (UA) à un contenu sur un serveur applicatif, ledit contenu référençant le premier identifiant, et suite à une modification de l'enregistrement, un message comprenant au moins ladite association, à destination du serveur applicatif (Sapp) de tel sorte que le serveur applicatif fournisse, à son tour, ladite association au terminal utilisateur lorsque celui-ci accède au contenu.

9. **Serveur** résolveur apte à recevoir et à émettre une requête de résolution d'identifiant d'une ressource sur un réseau, et comprenant un dispositif d'optimisation conforme à la revendication 8.

10. **Système** d'optimisation de la fréquence de rafraichissement d'au moins une partie d'un enregistrement comprenant une association entre un premier identifiant d'une ressource sur un réseau et au moins second identifiant de la ressource, et une durée de vie pour ladite association, le système étant **caractérisé en ce qu'**il comprend :
• un serveur résolveur (Sres) conforme à la revendication 9,
• un serveur applicatif (Sapp) référençant le premier identifiant compris dans l'enregistrement, recevant de la part du serveur résolveur un message comprenant au moins ladite association, et émettant l'au moins un second identifiant vers un terminal d'utilisateur (UA) apte à émettre une requête de résolution d'identifiant d'une ressource sur un réseau vers le serveur résolveur.

11. **Programme d'ordinateur,** comprenant des instructions pour la mise en oeuvre des étapes du procédé d'optimisation selon la revendication 1, lorsque ce programme est exécuté par un processeur.

12. **Support d'enregistrement** lisible par un serveur résolveur, sur lequel est enregistré le programme selon la revendication 11.

## Patentansprüche

1. Verfahren zur Optimierung der Bildwiederholfrequenz mindestens eines Teils einer Aufzeichnung, die eine Zuordnung zwischen einer ersten Kennung einer Ressource in einem Netz und mindestens einer zweiten Kennung der Ressource und eine Lebensdauer für die Zuordnung enthält, wobei das Verfahren von einem Resolver-Server (Sres) durchgeführt wird, der die Aufzeichnung von einem so genannten autoritativen Server (Saut) erhalten hat, wobei das Verfahren **dadurch gekennzeichnet ist, dass** es enthält:
• in Erwartung eines Zugriffs durch ein Benutzer-Endgerät (UA) auf einen Inhalt auf einem Anwendungsserver, wobei der Inhalt die erste Kennung referenziert, und nach einer Änderung der Aufzeichnung, ein Senden (E06) einer mindestens die Zuordnung enthaltenden Nachricht an den Anwendungsserver, damit der Anwendungsserver seinerseits die Zuordnung an das Benutzer-Endgerät liefert, wenn dieses auf den Inhalt zugreift.

2. Optimierungsverfahren nach Anspruch 1, das enthält:
• einen Erhalt (E05) einer Information bezüglich des Fortbestands der Aufzeichnung,
• eine Änderung der Aufzeichnung abhängig von der Information vor dem Senden (E06).

3. Optimierungsverfahren nach Anspruch 2, wobei mindestens die Lebensdauer geändert wird.

4. Optimierungsverfahren nach Anspruch 2, wobei mindestens die zweite Kennung geändert wird.

5. Optimierungsverfahren nach einem der Ansprüche 1 bis 4, das außerdem einen Empfang (E01) eines Abonnementantrags für Aktualisierungen der Aufzeichnung vom Anwendungsserver (Sapp) enthält.

6. Optimierungsverfahren nach einem der Ansprüche 1 bis 5, das außerdem ein vorhergehendes Senden (E02) eines Abonnementantrags für Aktualisierungen der Aufzeichnung an den autoritativen Server (Saut) enthält.

7. Optimierungsverfahren nach einem der Ansprüche 1 bis 6, wobei die mindestens eine zweite Kennung das Ergebnis einer Auswahl einer Teileinheit ausgehend von einer Einheit von zweiten Kennungen ist, die der ersten Kennung in der erhaltenen Aufzeichnung zugeordnet sind.

8. Vorrichtung zur Optimierung der Bildwiederholfrequenz mindestens eines Teils einer Aufzeichnung, die eine Zuordnung zwischen einer ersten Kennung einer Ressource in einem Netz und mindestens einer zweiten Kennung der Ressource und eine Lebensdauer für die Zuordnung enthält, wobei die Vorrichtung in einem Resolver-Server (Sres) enthalten ist, der die Aufzeichnung von einem so genannten autoritativen Server (Saut) erhalten hat, wobei die Vorrichtung **dadurch gekennzeichnet ist, dass** sie enthält:
• einen Sender, der fähig ist, in Erwartung eines Zugriffs von einem Benutzer-Endgerät (UA) auf einen Inhalt auf einem Anwendungsserver, wobei der Inhalt die erste Kennung referenziert, und nach einer Änderung der Aufzeichnung, eine mindestens die Zuordnung enthaltende Nachricht an den Anwendungsserver (Sapp) zu senden, damit der Anwendungsserver seinerseits die Zuordnung an das Benutzer-Endgerät sendet, wenn dieses auf den Inhalt zugreift.

9. Resolver-Server, der fähig ist, eine Auflösungsanforderung einer Kennung einer Ressource in einem Netz zu empfangen und zu senden und eine Optimierungsvorrichtung nach Anspruch 8 enthält.

10. System zur Optimierung der Bildwiederholfrequenz mindestens eines Teils einer Aufzeichnung, die eine Zuordnung zwischen einer ersten Kennung einer Ressource in einem Netz und mindestens einer zweiten Kennung der Ressource und eine Lebensdauer für die Zuordnung enthält, wobei das System **dadurch gekennzeichnet ist, dass** es enthält:
• einen Resolver-Server (Sres) nach Anspruch 9,
• einen Anwendungsserver (Sapp), der die in der Aufzeichnung enthaltene erste Kennung referenziert, der vom Resolver-Server eine mindestens die Zuordnung enthaltende Nachricht empfängt und die mindestens eine zweite Kennung an ein Benutzer-Endgerät (UA) sendet, das fähig ist, eine Auflösungsanforderung einer Kennung einer Ressource in einem Netz an den Resolver-Server zu senden.

11. Computerprogramm, das Anweisungen zur Durchführung der Schritte des Optimierungsverfahrens nach Anspruch 1 enthält, wenn dieses Programm von einem Prozessor ausgeführt wird.

12. Aufzeichnungsträger, der von einem Resolver-Server lesbar ist, auf dem das Programm nach Anspruch 11 aufgezeichnet ist.

## Claims

1. Method for optimizing the refresh rate of at least a part of a record comprising an association between a first identifier of a resource on a network and at least one second identifier of the resource, and a time-to-live for said association, the method being implemented by a resolver server (Sres) having obtained said record from a so-called authoritative server (Saut), the method being **characterized in that** it comprises:
• in anticipation of a user terminal (UA) accessing content on an application server, said content referencing the first identifier, and following modification of the record, transmitting (E06) a message comprising at least said association to the application server, such that the application server in turn provides said association to the user terminal when this accesses the content.

2. Optimization method according to Claim 1, comprising:
• obtaining (E05) an item of information relating to the life expectancy of the record,
• modifying the record according to the item of information, prior to the transmission (E06).

3. Optimization method according to Claim 2, in which at least the time-to-live is modified.

4. Optimization method according to Claim 2, in which at least the second identifier is modified.

5. Optimization method according to one of Claims 1 to 4, also comprising receiving (E01) a request for subscription to updates of the record, from the application server (Sapp).

6. Optimization method according to one of Claims 1 to 5, also comprising prior transmission (E02) of a request for subscription to updates of the record, to the authoritative server (Saut).

7. Optimization method according to one of Claims 1 to 6, in which the at least one second identifier is the result of a selection of a subset from a set of second identifiers associated with the first identifier in the record obtained.

8. Device for optimizing the refresh rate of at least a part of a record comprising an association between a first identifier of a resource on a network and at least one second identifier of the resource, and a time-to-live for said association, the device being included in a resolver server (Sres) having obtained said record from a so-called authoritative server (Saut), the device being **characterized in that** it comprises:
• a transmitter capable of transmitting, in anticipation of a user terminal (UA) accessing content on an application server, said content referencing the first identifier, and following modification of the record, a message comprising at least said association to the application server (Sapp), such that the application server in turn provides said association to the user terminal when this accesses the content.

9. Resolver server capable of receiving and of transmitting an identifier resolution request for a resource on a network, and comprising an optimization device according to Claim 8.

10. System for optimizing the refresh rate of at least a part of a record comprising an association between a first identifier of a resource on a network and at least second identifier of the resource, and a time-to-live for said association, the system being **characterized in that** it comprises:
• a resolver server (Sres) according to Claim 9,
• an application server (Sapp) referencing the first identifier included in the record, receiving from the resolver server a message comprising at least said association, and transmitting the at least one second identifier to a user terminal (UA) capable of transmitting an identifier resolution request for a resource on a network to the resolver server.

11. Computer program, comprising instructions for implementing the steps of the optimization method according to Claim 1 when this program is executed by a processor.

12. Recording medium that can be read by a resolver server, on which is stored the program according to Claim 11.
